# EUROPÄISCHE PATENTSCHRIFT

(11) **EP 1 273 597 B1**
(45) Veröffentlichungstag und Bekanntmachung des Hinweises auf die Patenterteilung: **21.11.2007**
(21) Anmeldenummer: 02078858.4
(22) Anmeldetag: 04.12.1999
(51) Int. Cl.: C08F 14/18, C08F 6/16, C08K 5/06

(54) **Wässrige Dispersionen von Fluorpolymeren**
Aqueous dispersions of fluoropolymers
Dispersions aqueuses de fluoropolymers

(30) Priorität: 11.12.1998 DE 19857111
(43) Veröffentlichungstag der Anmeldung: 08.01.2003
(62) Teilanmeldung aus: 99962216.0
(73) Patentinhaber: Dyneon GmbH & Co. KG, 84504 Burgkirchen (DE)
(72) Erfinder: Blädel, Herman, c/o 3M Europe s.a., 1831 Diegem (BE); Hintzer, Klaus, c/o 3M Europe s.a., 1831 Diegem (BE); Loehr, Gernot, c/o 3M Europe s.a., 1831 Diegem (BE); Schwertfeger, Werner, c/o 3M Europe s.a., 1831 Diegem (BE); Sulzbach, Reinhard Albert, c/o 3M Europe s.a., 1831 Diegem (BE)
(74) Vertreter: Kurz, Arnd

(56) Entgegenhaltungen:
- EP-A- 0 014 431
- EP-A- 0 721 974
- US-A- 4 369 266
- US-A- 5 464 897

## Beschreibung

Die vorliegende Erfindung betrifft wäßrige Dispersionen von Fluorpolymeren, die im wesentlichen frei von fluorhaltigen Emulgatoren sind, ein Verfahren zur Herstellung derartiger Dispersionen und deren Verwendung. Unter "im wesentlichen frei" ist ein Gehalt von weniger als 100 ppm, bevorzugt weniger als 50 ppm, besonders bevorzugt weniger als 25 ppm und insbesondere weniger als 5 ppm zu verstehen.

Polyfluorethylendispersionen finden in der Beschichtungsindustrie breite Anwendung, da die Beschichtungen einzigartige anwendungstechnische Eigenschaften, wie zum Beispiel Antihafteigenschaften, gute Witterungsbeständigkeit und Nichtentflammbarkeit, aufweisen. Sie werden hauptsächlich zur Beschichtung von Küchengeräten, chemischen Apparaturen und Glasgeweben eingesetzt. Bei vielen derartigen Anwendungen werden die Dispersionen mit verhältnismäßig hohen Feststoffgehalten, zum Beispiel bis zu 70 Gew.-%, aufgetragen. Diese konzentrierten Dispersionen werden vorwiegend mit nichtionischen Emulgatoren, wie zum Beispiel Alkylarylpolyethoxyalkoholen und Alkylpolyethoxyalkoholen, kolloidchemisch stabilisiert.

Zur Herstellung von Fluorpolymeren gibt es im Prinzip zwei verschiedene Polymerisationsverfahren, nämlich die Suspensionspolymerisation, die ein Polymergranulat ergibt, und andererseits die sogenannte Emulsionspolymerisation, die eine wäßrige kolloidale Dispersion ergibt. Die vorliegende Erfindung betrifft die Emulsionspolymerisation, die so erhaltenen Dispersionen und deren Verwendung.

Bei der Herstellung derartiger Dispersionen gibt es im Prinzip zwei Verfahrensschritte, nämlich die Polymerisation und die Aufkonzentrierung.

Nach dem Verfahren der wäßrigen Emulsionspolymerisation gelangt man erstens zu nicht aus der Schmelze verarbeitbaren Homopolymeren, zum Beispiel PTFE, zweitens zu "modifizierten" Polymeren, zum Beispiel einem Polymer mit mehr als etwa 99 Mol-% Tetrafluorethylen (TFE) und nur einer so geringen Menge an Comonomer(en), daß das Produkt seinen Charakter als "nicht aus der Schmelze verarbeitbar" behält, drittens zu niedermolekularen "Mikropulver"-Dispersionen, die aus der Schmelze verarbeitbar sind, und viertens zu Copolymeren, wie zum Beispiel Fluorthermoplasten oder Fluorelastomeren. Zu den Fluorthermoplasten gehören Copolymere, die überwiegend aus TFE und einer solchen Menge eines oder mehrerer Comonomere, zum Beispiel 1 bis 50, vorzugsweise 1 bis 10, Mol-%, bestehen, daß das Produkt aus der Schmelze verarbeitbar ist. Übliche Fluormonomere sind neben TFE Vinylidenfluorid (VDF), andere fluorierte Olefine, wie zum Beispiel Chlortrifluorethylen (CTFE), insbesondere perfluorierte Olefine mit 2 bis 8 Kohlenstoffatomen, zum Beispiel Hexafluorpropen (HFP), fluorierte Ether, insbesondere perfluorierte Vinylalkylether mit Alkylteilen mit 1 bis 6 Kohlenstoffatomen, zum Beispiel Perfluor(n-propylvinyl)ether (PPVE). Als Comonomere kommen auch nichtfluorierte Olefine in Betracht, zum Beispiel Ethylen und Propylen. Die so erhaltenen Dispersionen von Polymeren, die aus der Schmelze verarbeitbar oder nicht aus der Schmelze verarbeitbar sind, weisen in der Regel einen Feststoffgehalt von 15 bis 30 Gew.-% auf. Daher muß man zur Erzielung des oben genannten hohen Feststoffgehalts für die Anwendung als Beschichtung und vorteilhafterweise auch für die Lagerung und den Transport den Feststoffgehalt durch Aufkonzentrierung erhöhen. Dazu bedient man sich beispielsweise der thermischen Aufkonzentrierung gemäß US-A 3 316 201, der Dekantierung (US-A 3 037 953) und der Ultrafiltration (US-A 4 369 266).

Die bekannte Emulsionspolymerisation erfolgt meistens in einem Druckbereich von 5 bis 30 bar und einem Temperaturbereich von 5 bis 100 °C, wie es beispielsweise in der EP-B 30 663 beschrieben ist. Das Polymerisationsverfahren zur Herstellung von PTFE-Dispersionen entspricht im wesentlichen dem bekannten Verfahren zur Herstellung von feinen Harzpulvern, sogenannter Pastenware (US-A 3 142 665). Das Polymerisationsverfahren zur Herstellung von Copolymeren, wie zum Beispiel Fluorthermoplastdispersionen, entspricht dem Verfahren zur Herstellung dieser Materialien in Form von Schmelz-Pellets.

Bei allen diesen Emulsionspolymerisationen ist ein Emulgator erforderlich, der die Polymerisation nicht durch Kettenübertragung stört. Diese Emulgatoren werden nichttelogene Emulgatoren genannt (US-A 2 559 752). In der Hauptsache verwendet man Perfluoroctansäuren (PFOS, zum Beispiel n-PFOS, CAS-Nr. 335-67-1) in Form von Ammonium- und/oder Alkalisalzen. Bei Verwendung der Abkürzung PFOS im folgenden Text sollen andere fluorierte Emulgatoren jedoch nicht ausgeschlossen sein. Der Gehalt an diesem Emulgator liegt in der Regel im Bereich von 0,02 bis 1 Gew.-%, bezogen auf das Polymer.

Gelegentlich werden andere Fluoremulgatoren eingesetzt.
So wird beispielsweise in der EP-A 822 175 die Verwendung von Salzen von CH₂-haltigen Fluorcarbonsäuren zur Emulsionspolymerisation von TFE beschrieben.
In der WO-A 97/08214 wird die Verwendung von 2-Perfluorhexylethansulfonsäure oder deren Salzen für die TFE-Polymerisation beschrieben.

In der US-A 2 559 752 werden weitere fluorierte Emulgatoren beschrieben, die jedoch wegen ihrer geringen Flüchtigkeit keine weite Verbreitung gefunden haben. Diese Chemikalien können zu einer Verfärbung der Endprodukte bei hohen Verarbeitungstemperaturen führen.

Einer der größten Vorteile von PFOS besteht in ihrer hohen Flüchtigkeit. PFOS ist ein sehr wirksamer Emulgator und wegen ihrer Reaktionsträgheit bei der Polymerisation praktisch unentbehrlich. PFOS ist jedoch nicht biologisch abbaubar und wird neuerdings als umweltgefährdend eingestuft.

Es ist jedoch bekannt, PFOS aus Abgasen abzutrennen (EP 731 081), und außerdem wurden vorteilhafte Verfahren zur Abtrennung von PFOS aus Abwasser vorgeschlagen (in der US-A 4 282 162 und den noch unveröffentlichten, am 2. Juni 1998 hinterlegten deutschen Patentanmeldungen 198 24 614.5 und 198 24 615.3).

Bei den oben aufgeführten Aufkonzentrationstechniken verbleibt die PFOS größtenteils in der Polymerdispersion, selbst bei Ultrafiltration und Abdekantierung mit einem 100fachen Überschuß des nichtionischen Emulgators.

So verbleiben beispielsweise bei der Ultrafiltration gemäß US-A 4 369 266 etwa 30 % des ursprünglichen PFOS-Gehalts in den handelsüblichen Dispersionen. In speziellen Fällen kann der PFOS-Restgehalt auf weniger als 10 % verringert werden, jedoch ist das Verfahren im allgemeinen ökonomisch nicht sinnvoll: Zur Erzielung einer derartigen Verringerung muß man in der aufzukonzentrierenden Dispersion Wasser und einen nichtionischen Emulgator nachschleusen. Dadurch werden die Laufzeiten unvertretbar lang.

Bei der nachfolgenden Verwendung dieser Dispersionen kann das PFOS in die Umwelt gelangen, zum Beispiel mit dem unvermeidlichen Abwasser zur Reinigung der Einrichtungen und mit einem Aerosol in die Atmosphäre. Bei der Herstellung von Beschichtungen verstärkt sich letztere Emission noch, da PFOS und ihr Ammoniumsalz hochflüchtig sind. Außerdem werden PFOS und ihre Salze bei den normalerweise angewandten Sintertemperaturen von 350 bis 450 °C durch Decarboxylierung zu Fluorkohlenwasserstoffen zersetzt, die ein großes Erwärmungspotential für das Klima ("Treibhauseffekt") aufweisen.

Die vorliegende Erfindung liefert feststoffreiche Dispersionen, die im wesentlichen PFOS-frei sind. Im Rahmen der vorliegenden Erfindung ist unter "im wesentlichen frei" ein Gehalt von weniger als 100 ppm, bevorzugt weniger als 50 ppm, besonders bevorzugt weniger als 25 ppm und insbesondere weniger als 5 ppm zu verstehen. Diese Werte beziehen sich nicht nur auf den Feststoffgehalt, sondern auf die gesamte Dispersion. Dies erreicht man durch Abtrennung von fluorierten Emulgatoren, zum Beispiel PFOS, aus Fluorpolymerdispersionen, wie zum Beispiel PTFE-, Fluorthermoplast- oder Fluorelastomerdispersionen, mittels Anionenaustausch, indem man nämlich der Fluorpolymerdispersion einen nichtionischen Emulgator zusetzt und diese stabilisierte Dispersion mit einem basischen Anionenaustauscher in Berührung bringt. Dieses Verfahren arbeitet ohne Blockierung oder Verstopfung des Ionenaustauscherbetts durch koagulierte Latexteilchen. Die erhaltene Dispersion kann gegebenenfalls aufkonzentriert werden.

Als Fluorpolymerdispersionen eignen sich im Rahmen der vorliegenden Erfindung Dispersionen von Homopolymeren und Copolymeren aus einem oder mehreren fluorierten Monomeren, wie zum Beispiel TFE, VDF oder CTFE oder anderen fluorierten Olefinen mit 2 bis 8 Kohlenstoffatomen, perfluorierten Olefinen mit 2 bis 8 Kohlenstoffatomen, wie zum Beispiel HFP, fluorierten Ethern, insbesondere perfluorierten Vinylalkylethern mit Alkylteilen mit 1 bis 6 Kohlenstoffatomen, wie zum Beispiel Perfluor(n-propylvinyl)ether und Perfluor(methylvinyl)ether. Als Comonomere kommen auch nichtfluorierte Olefine in Betracht, zum Beispiel Ethylen und Propylen. Die Erfindung soll derartige Dispersionen unabhängig davon, ob das erhaltene Fluorpolymer aus der Schmelze verarbeitbar ist oder nicht, umfassen.

Die Latexteilchen haben einen submikroskopischen Durchmesser von 40 bis 400 nm. Die Latexteilchen sind in kolloidchemischem Sinne anionisch stabilisiert. Die anionische Stabilisierung wird durch anionische Endgruppen, meistens COOH-Gruppen, und durch den anionischen Emulgator, wie zum Beispiel PFOS, bewirkt. Derartige anionisch stabilisierte Dispersionen koagulieren in einem Anionenaustauscherbett rasch und blockieren somit das Ionenaustauscherbett. Dies ist auf den Zusammenbruch der elektrischen Doppelschicht an den Ionenaustauscherzentren zurückzuführen. Daher wird die Behandlung einer anionisch stabilisierten Dispersion mit einem Anionenaustauscher insbesondere für höhere Konzentrationen als technisch nicht sinnvoll erachtet.

Die Beeinträchtigung oder Verstopfung des Ionenaustauscherbetts wird schon bei Konzentrationen beobachtet, die 1/1000 der Polymerrohdispersionen, das heißt der Dispersion nach der Polymerisation, betragen.

Für die Wahl eines geeigneten Ionenaustauschers ist die Beobachtung hilfreich, daß der pKa-Wert der mit dem Gegenion des Anionenaustauschers korrespondierenden Säure höher als der pKa-Wert der anionischen Endgruppen des Polymers sein muß. Der Anionenaustauscher weist vorzugsweise ein mit einer Säure mit einem pKa-Wert von mindestens 3 korrespondierendes Gegenion auf.

Demgegenüber wird bei einem Anionenaustauscher in der SO₄²⁻- oder Cl⁻-Form selbst mit Dispersionen von Copolymeren aus TFE und HFP, sogenanntem "FEP", und aus TFE und PPVE, sogenanntem "PFA", nach längeren Zeiträumen Koagulation beobachtet. Diese beiden Copolymere weisen stark saure Endgruppen auf. Die Bildung derartiger Endgruppen wird in "Modern Fluoropolymers", John Scheirs (Herausgeber), John Wiley & Sons, Chichester (1997), Seiten 227 bis 288, 244, erklärt. Bei der Verarbeitung von TFE-Ethylen- oder VDF-Copolymerdispersionen werden Ionenaustauscherbetten unter derartigen Bedingungen praktisch sofort blockiert oder verstopft.

Daher wird der Anionenaustausch zu Beginn in einer im wesentlichen basischen Umgebung durchgeführt. Vorzugsweise wird das Ionenaustauscherharz in die OH⁻-Form überführt; jedoch kommen auch mit schwachen Säuren korrespondierende Anionen wie Fluorid oder Oxalat in Betracht. Diese Anionen liegen im allgemeinen in der Dispersion vor und stammen aus der Polymerisationsformulierung.

Die spezielle Basizität des verwendeten Anionenaustauschers ist nicht kritisch. Stark basische Harze sind aufgrund der beobachteten höheren Effizienz bei der PFOS-Abtrennung bevorzugt. Die wirksame Abtrennung von PFOS aus den Dispersionen hängt von den Ionenaustauschbedingungen ab.

Bei schwach basischen Ionenaustauscherharzen bricht PFOS früher durch. Ähnliches gilt für höhere Durchflußraten.

Die Durchflußrate ist nicht kritisch, man kann Standard-Durchflußraten anwenden. Die Strömung kann aufwärts oder abwärts gerichtet sein.

Der Ionenaustausch kann auch diskontinuierlich durchgeführt werden, indem man die Dispersion mit dem Ionenaustauscherharz in einem Behälter schwach rührt. Danach wird die Dispersion abfiltriert. Durch Anwendung der vorliegenden Erfindung wird bei diskontinuierlicher Fahrweise die Koagulation auf ein Minimum reduziert.

Nichtionische Emulgatoren werden in "Nonionic Surfactants", M. J. Schick (Herausgeber), Marcel Dekker, Inc., New York 1967, ausführlich beschrieben.

Die Wahl des nichtionischen Emulgators ist auch nicht kritisch. Hierfür kommen Alkylarylpolyethoxyalkohole, Alkylpolyethoxyalkohole oder ein beliebiger anderer nichtionischer Emulgator in Betracht. Dies stellt einen großen Vorteil dar, da bei der Abtrennung von PFOS aus handelsüblichen Dispersionen die Formulierung der eingesetzten Dispersionen im wesentlichen unverändert bleibt.

Hinsichtlich der Effektivität der PFOS-Abtrennung, den Durchflußraten oder der Blockierung des Ionenaustauscherbetts konnten bei Verwendung von nichtionischen Tensiden, zum Beispiel vom Alkylarylpolyethoxyalkohol-Typ, zum Beispiel Triton^{™} X100, oder vom Alkylpolyethoxyalkohol-Typ, zum Beispiel GENAPOL^{™} X 080, keine Unterschiede festgestellt werden.

Die PFOS-Abtrennung wird vorzugsweise mit Rohdispersionen aus der Polymerisation durchgeführt. Derartigen Dispersionen, die im allgemeinen einen Feststoffgehalt von 15 bis 30 Gew.-% aufweisen, setzt man eine so große Menge an nichtionischem Emulgator zu, daß die Dispersion während der nachfolgenden Verarbeitung, wie zum Beispiel der Aufkonzentrierung, stabil ist. Hierfür reicht eine Menge an nichtionischem Emulgator von 1 bis 15 Gew.-%, vorzugsweise von 1 bis 5 Gew.-%, aus. Diese Prozentangaben beziehen sich auf den Feststoffgehalt der Dispersion. Nach der PFOS-Abtrennung können die Dispersionen nach üblichen Verfahren aufkonzentriert werden, wie zum Beispiel durch Ultrafiltration oder thermische Aufkonzentrierung. Vorteilhafterweise ist die Konzentration des nichtionischen Emulgators im Endprodukt nicht viel höher als in vergleichbaren handelsüblichen Produkten. Durch die Abwesenheit von PFOS bei diesen Verfahren wird die Aufkonzentrierung nicht beeinträchtigt, das heißt bei der thermischen Aufkonzentrierung und bei der Ultrafiltration bildet sich nicht mehr Koagulat als in Gegenwart von PFOS.

Die Abtrennung von PFOS mittels Anionenaustausch kann auch mit bereits aufkonzentrierten Dispersionen mit einem Feststoffgehalt von bis zu 70 Gew.-% durchgeführt werden. Wegen der höheren Viskosität und Dichte derartiger Dispersionen ist dieses Verfahren jedoch technisch aufwendiger. In diesem Fall wird der Ionenaustausch vorzugsweise in Aufstromfahrweise betrieben, um Schwierigkeiten aufgrund des Schwebens des Ionenaustauscherbetts zu vermeiden. Die hohe Viskosität erlaubt meist keine hohen Durchflußraten. Für derartige feststoffreiche Dispersionen erscheint die diskontinuierliche Fahrweise vorteilhafter.

Zur PFOS-Abtrennung setzt man der Dispersion in der Regel unter schwachem Rühren 1-5 Gew.-% an nichtionischem Emulgator zu und führt sie über den Anionenaustauscher. Der Anionenaustauscher kann mit einer Lösung von nichtionischem Emulgator, wie er bei der dem Austausch zu unterwerfenden Dispersion verwendet wird, vorbehandelt werden. Das Anionenaustauscherharz wird vorzugsweise in die OH⁻-Form gebracht. Hierzu bringt man das Anionenaustauscherharz mit einer NaOH-Lösung in Berührung.

In der Regel verwendet man für den Ionenaustausch Dispersionen ohne Einstellung des pH-Werts, jedoch kann man den pH-Wert zur Verbesserung der kolloidalen Stabilität der Dispersion auch durch Zusatz einer Base wie wäßriger Ammoniak- oder Natriumhydroxidlösung erhöhen. Ein pH-Wert im Bereich von 7 bis 9 ist ausreichend. Der erhöhte pH-Wert nimmt keinen großen Einfluß auf die Effizienz der PFOS-Abtrennung. Es wird angenommen, daß dies darauf zurückzuführen ist, daß die PFOS nicht nur ausgetauscht, sondern auch am Ionenaustauscherharz stark absorbiert wird.

Danach werden die ionenausgetauschten Dispersionen aufkonzentriert, vorzugsweise durch thermische Aufkonzentrierung oder Ultrafiltration. Es konnte keine Beeinträchtigung dieser Verfahren festgestellt werden. Außerdem bleiben die Endverbraucherverarbeitung und die Endanwendungseigenschaften für derartige erfindungsgemäße Dispersionen unverändert.

Der Anionenaustausch in Gegenwart eines nichtionischen Emulgators ohne Blockierung des Ionenaustauscherbetts kann erfolgreich zur Abtrennung eines beliebigen anderen, in einem beliebigen Polymerisationsverfahren eingesetzten anionischen Emulgators angewandt werden.

Das in Rede stehende Verfahren kommt auch für alle Fluorpolymer-Rohdispersionen, wie zum Beispiel Dispersionen von PFA, FEP, THV (THV ist ein Terpolymer aus TFE, HFP und VDF), ET (ET ist ein Copolymer aus TFE und Ethylen), TFE/P (ein Copolymer aus TFE und Propylen), Copolymeren von VDF und HFP sowie Homopolymeren oder Copolymeren, die andere fluorierte Olefine oder Vinylether enthalten, in Betracht. Diese Polymere werden in der oben zitierten Druckschrift "Modern Fluoropolymers" ausführlich beschrieben.

Bei der Aufarbeitung gemäß US-A 5 463 021 wird unter anderem eine Behandlung von THV-Rohdispersionen mittels eines Ionenaustauschs als ein Aufarbeitungsschritt beschrieben. Dabei handelt es sich jedoch um einen Kationenaustausch zur Abtrennung von Manganionen, die aus dem als Polymerisationsinitiator verwendeten Permanganat stammen. Dabei wird die stabilisierende elektrische Doppelschicht nicht beeinflußt, da die Latexteilchen anionisch stabilisiert sind.

Die Erfindung wird nun anhand der folgenden Beispiele näher erläutert.

### Experimentelle Angaben:

Alle Prozentangaben beziehen sich auf das Gewicht, sofern nicht anders vermerkt.

### Bestimmung von PFOS

Die quantitative Bestimmung des PFOS-Gehalts der dem Anionenaustausch unterzogenen Dispersion kann nach der Methode gemäß "Encyclopedia of Industrial Chemistry Analysis", Band 1, Seiten 339 bis 340, Interscience Publishers, New York, NY, 1971, und EP-A 194 690 erfolgen.

Bei einer anderen zur Anwendung kommenden Methode wird das PFOS in den Methylester überführt und der Estergehalt gaschromatographisch unter Verwendung eines internen Standards analysiert. Bei letzterer Methode liegt die Nachweisgrenze für PFOS bei 5 ppm. Diese Methode wurde in den folgenden Beispielen angewandt.

### Anionenaustausch

Es wurde mit Standardgeräten gearbeitet. Die Säulenabmessungen betrugen 5 x 50 cm. Als stark basisches Anionenaustauscherharz wurde AMBERLITE^{™} IRA 402 mit einer Kapazität von 1,2 meq/ml verwendet (AMBERLITE ist ein Warenzeichen von Rohm & Haas). Das Bettvolumen betrug in der Regel 400 ml. Der Ionenaustauscher wurde mit NaOH-Lösung in die OH⁻-Form gebracht. Der Austauscher wurde mit einer 5%igen Lösung des nichtionischen Emulgators vorbehandelt. Der Ionenaustausch erfolgte bei Raumtemperatur. Die Versuche wurden mit den in Tabelle 1 aufgeführten unterschiedlichen Durchflußraten durchgeführt. Der nichtionische Emulgator wurde den Dispersionen in Form einer 10%igen Lösung zugesetzt. Der Gehalt wurde entsprechend den Angaben in Tabelle 1 variiert. Die Werte beziehen sich auf den Polymergehalt. Die technische Durchführbarkeit dieses Verfahrens wird als erreicht erachtet, wenn mindestens 5 % der theoretischen Kapazität des eingesetzten Ionenaustauscherharzes von der PFOS-haltigen Dispersion genutzt werden, ohne daß das Bett blockiert wird und ohne daß die PFOS durchbricht.

Dabei wurden die folgenden nichtionischen Tenside verwendet:
NIS 1: Octylphenoxypolyethoxyethanol (Handelsprodukt TRITON^{™} X 100, TRITON ist ein Warenzeichen der Union Carbide Corp.).
NIS 2: Ethoxylat eines langkettigen Alkohols (Handelsprodukt GENAPOL^{™} X 080, GENAPOL ist ein Warenzeichen der Hoechst AG).

### Beispiele 1 bis 7

Alle Versuche wurden mit AMBERLITE IRA 402 in der OH⁻-Form durchgeführt. Die Vorbehandlung des Anionenaustauscherharzes mit einer wäßrigen Lösung des nichtionischen Tensids wurde gemäß Tabelle 1 verändert.

Die Fluorpolymerdispersion wurde durch Homopolymerisation von TFE gemäß EP-B 30 663 erhalten. Der Feststoffgehalt der verwendeten Rohdispersion beträgt etwa 20 % und die mittlere Teilchengröße beläuft sich auf etwa 200 bis 240 nm. Der pH-Wert beträgt 7. Die Menge und Art des der Rohdispersion zugesetzten nichtionischen Emulgators wurde gemäß Tabelle 1 geändert.

Der PFOS-Gehalt der Dispersion beträgt etwa 0,13 Gew.-% (was 3,14 mmol/kg Dispersion entspricht). Dies entspricht 2,7 ml Ionenaustauscherharz pro kg Rohdispersion.
Beispiel 3 zeigt, daß 54 ml des Gesamtvolumens von 400 ml Ionenaustauscherharz verbraucht werden. Somit belief sich die zur Verfügung gestellte Ionenaustauschkapazität für alle Beispiele auf einen mehr als 5-fachen Überschuß.

Die experimentellen Angaben gemäß Tabelle 1 zeigen verschiedene Durchflußraten. Während eines gegebenen Versuchs wurden keine Änderungen der Durchflußrate beobachtet. Das deutet darauf hin, daß das Ionenaustauscherbett nicht blockiert wurde. Die Laufzeit der Versuche betrug bis zu 67 h ohne Unterbrechung. Alle Beispiele ergeben Dispersionen mit PFOS-Gehalten unter 5 ppm, der analytischen Nachweisgrenze der angewandten Methode.

**TABELLE 1**

| Beispiel Nr. | 1 | 2 | 3 | 4 | 5 | 6 | 7 |
|---|---|---|---|---|---|---|---|
| Ionenaustauscherharz, ml | 400 ml | 400 ml | 400 ml | 4 parallele Säulen, jeweils 400 ml | 4 parallele Säulen, jeweils 400 ml | 400 ml | 400 ml |
| Vorbehandlung des Ionenaustauscherharzes mit einer wäßrigen Lösung von | 1 Gew.-% | 5 Gew.-% | 3 Gew.-% | 5 Gew.-% | 5 Gew.-% | 5 Gew.-% | 1 Gew.-% |
| | NIS 1 | NIS 1 | NIS 1 | NIS 1 | NIS 2 | NIS 2 | NIS 2 |
| | | | | | | | |
| Rohdispersion: | | | | | | | |
| Feststoffgehalt | 22,7% | 22,6% | 22,7% | 22,7% | 22,5% | 23% | 22,8% |
| PFOS-Gehalt | 0,132% | 0,130% | 0,132% | 0,136% | 0,138% | 0,138% | 0,136% |
| | | | | | | | |
| Rohdispersion | | | | | | | |
| Stabilisiert mit*) | 1% NIS 1 | 3% NIS 1 | 4% NIS 1 | 5%NIS 1 | 5% NIS 2 | 4% NIS 2 | 1% NIS 2 |
| Übergeführte Menge | 5 kg | 19 kg | 20 kg | 40 kg | 50 kg | 18 kg | 8 kg |
| Durchflußrate | 0,5 l/h | 0,6 l/h | 0,3 l/h | 0,6 l/h | 0,6 l/h | 0,6 l/h | 0,5 l/h |
| Laufzeit | 10h h | 35 h | 67 h | 17h h | 21 h | 30 h | 16 h |
| | | | | | | | |
| Blockierung ja/nein | Nein | Nein | Nein | Nein | Nein | Nein | Nein |
| | | | | | | | |
| Ionenausgetauschte Dispersion | | | | | | | |
| PFOS-Gehalt | < 5 ppm | < 5 ppm | < 5 ppm | <5 ppm | < 5 ppm | < 5 ppm | < 5 ppm |
| | | | | | | | |
| | *) bezogen auf den Feststoffgehalt der Dispersion | | | | | | |

### Beispiel 8

800 ml AMBERLITE IRA 402 (OH⁻-Form, vorbehandelt mit einer 5%igen Lösung von NIS 1) wurden langsam einem Rührkessel mit 20 Liter Dispersion, die der in den Beispielen 1 bis 7 verwendeten Dispersion ähnlich war, aber durch Ultrafiltration aufkonzentriert worden war (Feststoffgehalt: 52,5 %, PFOS-Gehalt: 0,065 %, NIS-1-Gehalt: 5 %, bezogen auf den Polymergehalt), zugesetzt. Nach 8 h schwachem Rühren bei Raumtemperatur wurde der Anionenaustauscher abfiltriert und der PFOS-Gehalt der Dispersion analysiert, was ein Ergebnis von weniger als 5 ppm PFOS ergab.

### Beispiel 9

Eine PFA-Rohdispersion wurde analog den Beispielen 1 bis 7 gereinigt. Es wurden 400 ml AMBERLITE IRA 402 (OH⁻-Form, vorbehandelt mit einer 1%igen Lösung von NIS 2) verwendet. Die PFA-Dispersion (1500 ml, Feststoffgehalt 20 %) wurde mit 5 % NIS 2, bezogen auf den Feststoffgehalt der Dispersion, stabilisiert. Diese Dispersion enthielt 0,066 % PFOS und wies einen pH-Wert von 4 auf. Die Dispersion wurde mit einer Durchflußrate von 100 ml/h über das Anionenaustauscherbett geführt. Dies entspricht einer Laufzeit von 15 h. Es wurde keine Blockierung des Betts beobachtet, und die erhaltene Dispersion wies einen PFOS-Gehalt < 5 ppm auf.

### Beispiel 10

Beispiel 9 wurde mit einer mit 5 Gew.-% NIS 2 stabilisierten FEP-Rohdispersion (Feststoffgehalt 20 %, PFOS-Gehalt 0,08 %) wiederholt. Der Ionenaustausch ergab eine FEP-Dispersion mit < 5 ppm PFOS. Es wurde keine Blockierung des Betts beobachtet.

### Beispiel 11

Beispiel 9 wurde mit einer THV-Dispersion mit einem Feststoffgehalt von 20 % und einer mittleren Teilchengröße von 80 nm wiederholt. Vor dem Anionenaustausch wurde die Dispersion mit einem Kationenaustauscherharz behandelt, wie es in der US-A 5 463 021 beschrieben wird. Der Anionenaustausch ergab eine THV-Dispersion mit < 5 ppm PFOS, und es wurde keine Blockierung des Betts beobachtet.

## Patentansprüche

1. Wäßrige Fluorpolymerdispersion mit ein Festoffgehalt von 15 bis 70 Gew %, enthaltend:
(i) Latexteilchen mit einem Durchmesser von 40 bis 400 nm;
(ii) 1 bis 15 Gew % bezogen auf den Feststoffgehalt der Dispersion aus nichtionischem Emulgator; und
(iii) nicht mehr als 100 ppm an fluorhaltigem Emulgator
und wobei die Dispersion erhätlich ist durch ein Verfahren in dem man der Fluorpolymerdispersion einen nichtionischen Emulgator zusetzt in einer Menge von 1 bis 15 Gew.-% bezogen auf den Feststoffgehalt der Dispersion und diese stabilisierte Dispersion mit einem basischen Anionenaustauscher in Serünrung bringt.

2. Dispersion nach Anspruch 1, **dadurch gekennzeichnet, daß** es sich bei dem Fluorpolymer um ein Tetrafluorethylenpolymer handelt.

3. Dispersion nach Anspruch 2, **dadurch gekennzeichnet, daß** das Polymer mindestens ein Monomer aus der Gruppe bestehend aus fluorierten Olefinen mit 2 bis 8 Kohlenstoffatomen und fluorierten Vinylalkylethern mit einem Alkylteil mit 1 bis 6 Kohlenstoffatomen enthält.

4. Dispersion nach Anspruch 3, **dadurch gekennzeichnet, daß** das fluorierte Olefin und der fluorierte Ether perfluoriert sind

5. Dispersion nach Anspruch 4, **dadurch gekennzeichnet, daß** es sich bei dem fluorierten Olefin um Hexafluorpropen und/oder Vinylidenfluorid handelt.

6. Dispersion nach Anspruch 5, **dadurch gekennzeichnet, daß** es sich bei dem Ether um Perfluor(n-propylvinyl)- ether oder Perfluor(methylvinyl)ether handelt.

7. Dispersion nach Anspruch 4, **dadurch gekennzeichnet, daß** das Polymer 90 bis 100 Mol-% Tetrafluorethylen enthält.

8. Dispersion nach Anspruch 1, **dadurch gekennzeichnet, daß** das Fluorpolymer ein oder mehrere fluorierte Monomere enthält mit der Maßgabe, daß es sich bei keinem der Monomere um Tetrafluorethylen handelt.

9. Dispersion nach Anspruch 1 wobei der nichtionischen Emulgator vom Alkylpolyethoxyalkohol-Typ ist.

## Claims

1. Aqueous fluoropolymer dispersion with a solids content of from 15 to 70% by weight, comprising:
(i) latex particles with a diameter of from 40 to 400mm;
(ii) from 1 to 15% by weight, based on the solids content of the dispersion, of non-ionic emulsifier; and
(iii)not more than 100ppm of fluorine-containing emulsifier,
where its dispersion is obtainable via a process in which an amount of from 1 to 15% by weight, based on the solids content of its dispersion, of a non-ionic emulsifier is added to the fluoropolymer dispersion, and this stabilized dispersion is brought into contact with a basic anion exchanger.

2. Dispersion according to Claim 1, **characterized in that** the fluoropolymer is a tetrafluoroethylene polymer.

3. Dispersion according to Claim 2, **characterized in that** the polymer comprises at least one monomer selected from the group consisting of fluorinated olefins of 2 to 8 carbon atoms and fluorinated vinylalkyl ethers with an alkyl radical having 1 to 6 carbon atoms.

4. Dispersion according to Claim 3, **characterized in that** the fluorinated olefin and the fluorinated ether are perfluorinated.

5. Dispersion according to Claim 4, **characterized in that** the fluorinated olefin is hexafluoropropene and/or vinylidene fluoride.

6. Dispersion according to Claim 5, **characterized in that** the ether is perfluoro(n-propyl vinyl) ether or perfluoro(methyl vinyl) ether.

7. Dispersion according to Claim 4, **characterized in that** the polymer contains 90 to 100 mol-% of tetrafluoroethylene.

8. Dispersion according to Claim 1, **characterized in that** the fluoropolymer contains one or more fluorinated monomers, with the proviso that none of the monomers is tetrafluoroethylene.

9. Dispersion according to Claim 1 where the non-ionic emulsifier is of alkylpolyethoxy alcohol type.

## Revendications

1. Dispersion aqueuse de fluoropolymère ayant une teneur en solides de 15 à 70 % en poids, comprenant :
(i) des particules de latex d'un diamètre de 40 à 400 nm,
(ii) 1 à 15 % en poids, par rapport à la teneur en solides de la dispersion, d'émulsionnant non ionique ; et
(iii) pas plus de 100 ppm d'émulsionnant contenant du fluor,
et dans laquelle la dispersion peut être obtenue selon un procédé dans lequel on ajoute à la dispersion de fluoropolymère un émulsionnant non ionique en quantité de 1 à 15 % en poids par rapport à la teneur en solides de la dispersion, et on met en contact cette dispersion stabilisée avec un échangeur anionique basique.

2. Dispersion selon la revendication 1, **caractérisée en ce que** le fluoropolymère est un polymère de tétrafluoroéthylène.

3. Dispersion selon la revendication 2, **caractérisée en ce que** le polymère contient au moins un monomère du groupe constitué des oléfines fluorées ayant 2 à 8 atomes de carbone et des vinylalkyl-éthers fluorés avec une partie alkyle ayant 1 à 6 atomes de carbone.

4. Dispersion selon la revendication 3, **caractérisée en ce que** l'oléfine fluorée et l'éther fluoré, sont perfluorés.

5. Dispersion selon la revendication 4, **caractérisée en ce que** l'oléfine fluorée est l'hexafluoro-propène et/ou le fluorure de vinylidène.

6. Dispersion selon la revendication 5, **caractérisée en ce que** l'éther est un perfluoro(n-propylvinyl)-éther ou un perfluoro(méthylvinyl)éther.

7. Dispersion selon la revendication 4, **caractérisée en ce que** le polymère contient 90 à 100 % en mole de tétrafluoréthylène.

8. Dispersion selon la revendication 1, **caractérisée en ce que** le fluoropolymère contient un ou plusieurs monomères fluorés, à condition qu'aucun des monomères ne soit du tétrafluoréthylène.

9. Dispersion selon la revendication 1 dans laquelle l'émulsionnant non ionique est du type alkyl-polyéthoxyalcool.
